# EUROPEAN PATENT APPLICATION

(11) **EP 1 815 976 A2**
(43) Date of publication of application: **08.08.2007**
(21) Application number: 07101653.9
(22) Date of filing: 02.02.2007
(51) Int. Cl.: B32B 27/04, B32B 17/04

(54) **Polymer-based multilayer material products**

(30) Priority: 03.02.2006 IT BO20060059
(71) Applicant: Ama Composites S.r.l., 41011 Campogalliano (IT)
(72) Inventor: CORRADINI, Marco, 41011, CAMPOGALLIANO (IT)
(74) Representative: Jorio, Paolo

(57) **Abstract**

A polymer-based multilayer material product (1) formed by a central layer (2) made of glass fibre and thermoplastic resin; a first coating layer (3) made of a material included in the group consisting of polyvinylchloride, propylene, thermoplastic olefins, fabric and felt; an intermediate layer (4) arranged between the central layer (2) and the first coating layer (3) and made of a material included in the group consisting of polypropylene foam, polyethylene foam, polyvinylchloride foam and polyurethane foam; and a second coating layer (5) arranged on the opposite side with respect to the central layer (2) and made of a material included in the group consisting of polypropylene, polyethylene foam, fabric, aluminium, thermoplastic olefins and natural leather.

## Description

The present invention relates to polymer-based multilayer material products.

In the course of time, polymer-based multilayer materials have aroused an ever increasing interest because of their high use versatility. Specifically, their use is wide-spread in the car field.

In this respect, there is a continuous need for such multilayer materials to have an ever greater resistance (e.g. to water, to chemical agents or to UV radiation) and at the same time to be adaptable to determined customer aesthetic tastes. Another need which is felt in the field is related to a simpler and more cost-effective production of such multilayer materials.

The Applicant has developed a new typology of products made of polymer-based multilayer material and a method for the preparation thereof which is capable of satisfying the above needs.

It is the object of the present invention to provide a polymer-based multilayer material product characterised in that it comprises a central layer made of glass fibre and thermoplastic resin, and a first and a second coating layers arranged on opposite sides with respect to said central layer so as to form a sandwich structure.

According to a preferred embodiment of the present invention, said thermoplastic resin is propylene or polycarbonate, said first coating layer is made of a material included in the group consisting of polyvinylchloride, polypropylene, thermoplastic olefins, fabric and felt, and said second coating layer is made of a material included in the group consisting of polypropylene, polyethylene foam, fabric, aluminium, thermoplastic olefins and natural leather.

According to a further preferred embodiment of the present invention, said multilayer material comprises an intermediate layer arranged between said central layer and said first coating layer and made of a material included in the group consisting of polypropylene foam, polyethylene foam, polyvinylchloride foam and polyurethane foam.

A further object of the present invention is related to a method for the production of polymer-based multilayer material products characterised in that it comprises the steps of:
- heating a plate made of glass fibre and thermoplastic resin to a temperature of approximately 190°C;
- arranging at least one coating layer on each face of said plate for the production of a sandwich structure;
- subjecting said sandwich structure to a pressure comprised between 1 and 5 bars until a semi-finished product comprising the desired product is obtained;
- carrying out the finishing cutting of the desired product.

According to a preferred embodiment of the method of the present invention, the step of finishing cutting contemplates the use of waterjet technology.

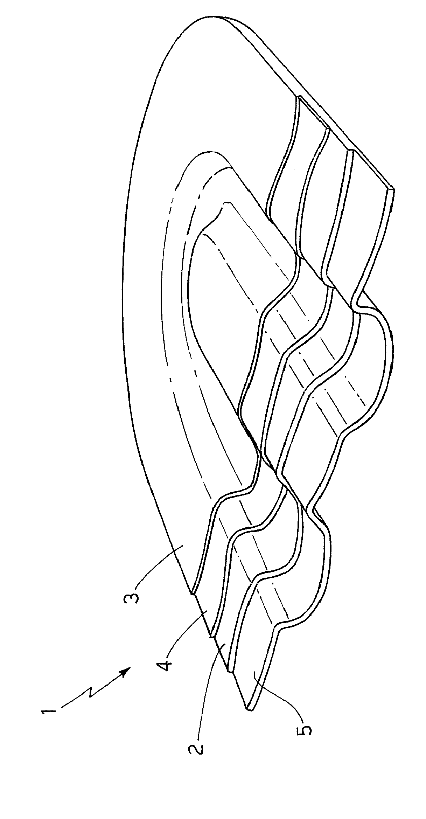

The following example serves as illustrative and non-limitative purpose, for a better understanding of the invention with the aid of the figure of the accompanying drawing, which is a perspective view with parts removed for clarity.

In the figure, numeral 1 indicates, as a whole, the polymer-based multilayer material product of the present invention.

The product 1 comprises a central layer 2 made of glass fibre and polypropylene, a first coating layer 3 arranged above the central layer 2 and made of thermoplastic olefins, an intermediate layer 4 arranged between the central layer 2 and the first coating layer 3 and made of propylene foam, and a second coating layer 5 arranged under the central layer 2 and made of polyethylene foam.

The product 1 has been obtained by means of a procedure comprising, in a sequence, the steps of heating a plate made of glass fibre and polypropylene to a temperature of 190° by using an oven so as to maintain the same temperature on the entire area to be heated; depositing the coating layers and the intermediate layer on the heated plate according to the arrangement shown in the figure; subjecting the sandwich structure obtained in the previous step to a pressure between 1 and 5 bars until the desired shape shown in the figure is obtained; cutting by means of a waterjet technology cutting robot the semi-finished product obtained in the previous step to obtain the finished product.

The multilayer materials of the present invention ensure a broad selection of mechanical resistances by affecting the density of the central layer.

By using low pressure thermo-compression, the procedure of the present invention allows to combine the central layer with different materials in order to satisfy the different production needs. Furthermore, a high amount of pieces may be moulded with moderate investments (multilayer wooden, resin, aluminium moulds etc.), ensuring an excellent result at very reasonable costs.

A further advantage of the procedure of the present invention is related to the possibility of obtaining a multilayer product by means of a single moulding operation, with the obvious productivity advantages deriving therefrom.

## Claims

1. A polymer-based multilayer material product (1), **characterised in that** it comprises a central layer (2) made of glass fibre and thermoplastic resin, and a first (3) and second (5) coating layers arranged on opposite sides with respect to said central layer (2) so as to form a sandwich structure.

2. A product according to claim 1, **characterised in that** said thermoplastic resin is polypropylene or polycarbonate.

3. A product according to claim 1 or 2, **characterised in that** said first coating layer (3) is made of a material included in the group consisting of polyvinylchloride, polypropylene, thermoplastic olefins, fabric and felt.

4. A product according to any of the preceding claims, **characterised in that** said second coating layer (5) is made of a material included in the group consisting of polypropylene, polyethylene foam, fabric, aluminium, thermoplastic olefin and natural leather.

5. A product according to any of the preceding claims, **characterised in that** it comprises an intermediate layer (4) arranged between said central layer (2) and said first coating layer (3) and made of a material included in the group consisting of polypropylene foam, polyethylene foam, polyvinylchloride foam and polyurethane foam.

6. A product according to any of the preceding claims, **characterised in that** said central layer (2) is made of glass fibre and polypropylene, said first coating layer (3) is made of thermoplastic olefins, said intermediate layer (4) is made of polypropylene foam, and said second coating layer (5) is made of polyethylene foam.

7. A method for the production of a polymer-based multilayer material product according to any of the preceding claims, **characterised in that** it comprises the steps of:
- heating a plate made of glass fibre and thermoplastic resin to a temperature of approximately 190°C;
- arranging at least one coating layer on each face of said plate for the production of a sandwich structure;
- subjecting said sandwich structure to a pressure comprised between 1 and 5 bars until a semi-finished product comprising the desired product is obtained;
- carrying out the finishing cutting of the desired product.

8. A method according to claim 7, **characterised in that** said step of finishing cutting contemplates the use of waterjet technology.
